(19) Europäisches Patentamt / European Patent Office / Office européen des brevets

(11) **EP 3 263 634 B1**

(12) **EUROPEAN PATENT SPECIFICATION**

| | |
|---|---|
| (45) Date of publication and mention of the grant of the patent:<br>**24.06.2020 Bulletin 2020/26** | (51) Int Cl.:<br>**C08J 5/24** *(2006.01)*   **C08J 5/04** *(2006.01)* |
| (21) Application number: **16755287.6** | (86) International application number:<br>**PCT/JP2016/054503** |
| (22) Date of filing: **17.02.2016** | (87) International publication number:<br>**WO 2016/136540 (01.09.2016 Gazette 2016/35)** |

(54) **PREPREG, AND FIBER-REINFORCED COMPOSITE MATERIAL**

PREPREG UND FASERVERSTÄRKTES VERBUNDMATERIAL

PRÉIMPRÉGNÉ, ET MATÉRIAU COMPOSITE RENFORCÉ PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2015 JP 2015036493**

(43) Date of publication of application:
**03.01.2018 Bulletin 2018/01**

(73) Proprietor: **Mitsui Chemicals, Inc.**
**Minato-ku**
**Tokyo 105-7122 (JP)**

(72) Inventors:
- **SASAKI, Toyoaki**
  **Sodegaura-shi**
  **Chiba 299-0265 (JP)**
- **FUJIHARA, Kazutoshi**
  **Sodegaura-shi**
  **Chiba 299-0265 (JP)**
- **OKIMURA, Hironobu**
  **Tokyo 105-7117 (JP)**
- **TAN, Junji**
  **Shanghai 200120 (CN)**

(74) Representative: **J A Kemp LLP**
**14 South Square**
**Gray's Inn**
**London WC1R 5JJ (GB)**

(56) References cited:
EP-A1- 0 515 992     EP-A1- 3 031 860
JP-A- S6 295 325     JP-A- H09 216 958
JP-A- H09 291 200    JP-A- S63 162 732
JP-A- 2003 012 818

Remarks:
The file contains technical information submitted after the application was filed and not included in this specification

**Description**

TECHNICAL FIELD

The present invention relates to prepregs which can give fiber-reinforced composite materials having excellent interlaminar fracture toughness and heat resistance, and to fiber-reinforced composite materials obtained using such prepregs.

BACKGROUND ART

Fiber-reinforced composite materials in which a reinforcement fiber substrate is impregnated with a resin are materials having both lightweight properties and mechanical properties, and are used in a wide range of applications. In particular, carbon fiber-reinforced composite materials in which a carbon fiber substrate is impregnated with a thermosetting resin have outstanding specific strength, specific rigidity and heat resistance. Such carbon composite materials grow in demand year by year, with their use being expanded to widespread applications such as aircraft structural parts, windmill blades, automobile parts, chassis (housings) of electronic equipment, and parts of sporting goods.

Thermosetting resins having excellent impregnation properties and heat resistance are frequent matrix resins that are used to constitute fiber-reinforced composite materials. Some example thermosetting resins are epoxy resins, phenolic resins, melanin resins, bismaleimide resins and unsaturated polyester resins. In particular, epoxy resins have gained wide use because of their outstanding heat resistance and formability and also because the obtainable carbon fiber composite materials attain high mechanical properties.

Fiber-reinforced composite materials are produced by various methods in accordance with the types of products and the properties required. The most common method is to use sheet-shaped intermediate materials (prepregs) in which carbon fibers are impregnated with a thermosetting resin as the matrix resin. A plurality of prepreg sheets are stacked in an arbitrary direction and the resin is cured by heating to give a fiber-reinforced composite material having high specific strength, specific rigidity and heat resistance.

Studies on such composite materials, in particular, carbon fiber composite materials have focused on increasing the strength and rigidity (elastic modulus) of matrix resins after curing in order to take full advantage of the high mechanical properties of carbon fibers. However, matrix resins with high rigidity are poor in toughness and are sometimes cracked by external forces such as impact, causing safety and durability problems in actual use. In particular, the decrease in mechanical properties due to interlaminar fracture is a problem in composite materials obtained by stacking of prepregs. A variety of methods that improve interlaminar fracture toughness have been studied. In particular, many techniques have been presented in which a material different from the matrix resin is dispersed between layers and serves to absorb the fracture energy produced by the load of stress.

For example, a technique has been presented in which polyamide particles are dispersed in a matrix resin (Patent Literature 1). However, the fact that polyamides decrease mechanical properties by absorbing moisture causes a problematic change in the mechanical properties of fiber-reinforced composite materials with time. Other techniques proposed are such that silicone particles or urethane particles are dispersed in a matrix resin so as to improve the toughness against interlaminar fracture in shear mode (mode II) (Patent Literatures 2 and 3). However, increasing the amount of polymer particles in order to obtain a sufficient improvement in interlaminar fracture toughness results in problems such as a decrease in specific strength and specific rigidity which are characteristics of fiber-reinforced composite materials as well as a decrease in the handling properties of prepregs. Further, a fiber-reinforced composite material is presented which includes, as the matrix resin, a thermosetting resin including a benzoxazine ring-containing compound and polyether sulfone particles (Patent Literature 4). However, this approach attains only a slight improvement and the interlaminar fracture toughness is insufficient as compared to when polyamide particles are dispersed in composite materials.

CITATION LIST

PATENT LITERATURE

Patent Literature 1: JP-A-2009-221460
Patent Literature 2: JP-A-2011-57907
Patent Literature 3: JP-A-2012-193322
Patent Literature 4: JP-A-2014-9280

SUMMARY OF INVENTION

TECHNICAL PROBLEM

An object of the present invention is to provide fiber-reinforced composite materials having improved interlaminar fracture toughness and high heat resistance.

SOLUTION TO PROBLEM

The present inventors carried out extensive studies to achieve the above object. As a result, the present inventors have found that the object can be accomplished by using a resin composition having a specific chemical composition in a prepreg formed by impregnating a reinforcement fiber with a resin component. The present invention has been completed based on the finding.

The present invention pertains to [1] to [6] described below.

[1] A prepreg comprising a reinforcement fiber (A) and a resin composition (E), the resin composition (E) comprising 0.1 to 8 mass% of particles (D) comprising an ultrahigh molecular weight olefin polymer or a crosslinked product thereof and satisfying requirements (i) to (ii) below, the resin composition (E) further comprising a thermosetting resin (B) and a curing agent (C);

(i) The intrinsic viscosity [$\eta$] of the ultrahigh molecular weight olefin polymer forming the particles, as measured in decalin solvent at 135°C and determined as defined hereinafter, is 5 to 50 dl/g;
(ii) The average particle size d50, which is a value at cumulative 50 mass % of grain size distribution obtained by the measurement of weight-basis grain size distribution using a Coulter counter method, is 3 to 200 $\mu$m;
wherein the thermosetting resin (B) is an epoxy resin, and the curing agent (C) is an epoxy curing agent.

[2] The prepreg described in [1] , wherein the particles (D) comprising an ultrahigh molecular weight olefin polymer or a crosslinked product thereof further satisfy requirement (iii) below.
(iii) The aspect ratio is 1.0 to 1.4.
[3] The prepreg described in [1] or [2], wherein the particles (D) comprising an ultrahigh molecular weight olefin polymer or a crosslinked product thereof further satisfy requirement (iv) below.
(iv) The melting point (Tm) of the ultrahigh molecular weight olefin polymer forming the particles measured with a differential scanning calorimeter (DSC) is 125 to 145°C.
[4] The prepreg described in any of [1] to [3], wherein the reinforcement fiber (A) is a carbon fiber.
[5] The prepreg described in any of [1] to [4], wherein the ultrahigh molecular weight olefin polymer forming the particles (D) comprising an ultrahigh molecular weight olefin polymer or a crosslinked product thereof is an ultrahigh molecular weight polyethylene.
[6] A fiber-reinforced composite material obtainable by curing the prepreg described in any of [1] to [5].

ADVANTAGEOUS EFFECTS OF INVENTION

The present invention can provide prepregs which can give fiber-reinforced composite materials having excellent interlaminar fracture toughness and heat resistance, and fiber-reinforced composite materials obtained using such prepregs.

DESCRIPTION OF EMBODIMENTS

⟨Reinforcement fibers (A)⟩

Examples of the reinforcement fibers (A) used in the invention include glass fibers, carbon fibers, aramid fibers and boron fibers. A mixture of two or more kinds of these fibers may be used. In particular, carbon fibers that are lightweight and have high mechanical properties are preferable.

The forms of the reinforcement fibers (A) are not particularly limited, and examples thereof include continuous fibers paralleled in one direction, single tows, rovings, woven fabrics, mats, knitted fabrics, braids, nonwoven fabrics and papers. A composite material which uses continuous fibers paralleled in one direction, or a woven fabric of fibers exhibits high mechanical properties and is suited for applications requiring high specific strength and specific rigidity.

⟨Resin compositions (E)⟩

The resin composition (E) used in the invention includes a thermosetting resin (B) and a curing agent (C), and further includes 0.1 to 8 mass%, preferably 0.3 to 8 mass%, more preferably 0.5 to 6 mass%, or particularly preferably 0.5 to 4 mass% of particles (D) including an ultrahigh molecular weight olefin polymer or a crosslinked product thereof (hereinafter, also written as the "ultrahigh molecular weight olefin polymer particles").

The lower limit of the content of the ultrahigh molecular weight olefin polymer particles (D) advantageously ensures that the interlaminar fracture toughness of the obtainable fiber-reinforced composite material is enhanced. The above upper limit is advantageous in terms of the mechanical characteristics such as strength and elastic modulus, and the heat resistance of the fiber-reinforced composite material.

⟨Ultrahigh molecular weight olefin polymer particles (D)⟩

In the invention, the ultrahigh molecular weight olefin polymer is a homopolymer such as polyethylene, polypropylene, poly-1-butene or poly-4-methyl-1-pentene, or a copolymer of ethylene with a small amount of other $\alpha$-olefin such as propylene, 1-butene, 1-hexene, 1-octene or 4-methyl-1-pentene, and satisfies the specific requirements described below. An ethylene polymer is preferable, and an ethylene homopolymer is particularly preferable. The ultrahigh molecular weight olefin polymer particles (D) may be a crosslinked product of the above ultrahigh molecular weight olefin polymer.

The requirements (i) and (ii) to be satisfied by the ultrahigh molecular weight olefin polymer particles (D) will be described.

Requirement (i)

The intrinsic viscosity [$\eta$] of the ultrahigh molecular weight olefin polymer forming the ultrahigh molecular weight olefin polymer particles (D) (when the ultrahigh molecular weight olefin polymer particles (D) are a crosslinked product of an ultrahigh molecular weight olefin polymer, the intrinsic viscosity of the ultrahigh molecular weight olefin polymer before crosslinking) is in the range of 5 to 50 dl/g, preferably 10 to 40 dl/g, and more preferably 10 to 30 dl/g as measured in decalin solvent at 135°C.

When the intrinsic viscosity is in the above range, the ultrahigh molecular weight olefin polymer particles (D) have high impact resistance and also exhibit low fluidity even at the melting point and above, thus retaining the shape. Consequently, a high effect in the enhancement in interlaminar fracture toughness can be advantageously expected. The prepreg production generally involves heating and pressing steps, and 5 dl/g or higher intrinsic viscosity [$\eta$] is advantageous in terms of the retention of the shape.

Requirement (ii)

The average particle size d50 of the ultrahigh molecular weight olefin polymer particles (D) is a value at cumulative 50 mass% of grain size distribution obtained by the measurement of weight-basis grain size distribution using a Coulter counter method. The average particle size d50 is in the range of 3 to 200 $\mu$m, preferably 3 to 100 $\mu$m, and more preferably 3 to 50 $\mu$m.

The above upper limit of the average particle size advantageously ensures that the effect of preventing the growth of cracks by impact or the like can be obtained at a low amount. On the other hand, the above lower limit of the average particle size advantageously ensures that the ultrahigh molecular weight olefin polymer particles (D) exhibit excellent handleability in steps such as when they are dispersed in the thermosetting resin. In the invention, the grain size distribution of the ultrahigh molecular weight olefin polymer particles (D) is preferably narrow in order to ensure that the ultrahigh molecular weight olefin polymer particles (D) will be dispersed uniformly in the resin composition (E).

When the average particle size d50 is in the range of 3 to 50 $\mu$m, it is preferable that the requirement (ii)-2 below be further satisfied.

Requirement (ii)-2

The average particle size d50 of the ultrahigh molecular weight olefin polymer particles (D) is in the range of 3 to 50 $\mu$m, and not less than 50 mass% of the ultrahigh molecular weight olefin polymer particles (D) are particles with a particle size of 40 $\mu$m or less.

In more detail, the latter of the requirement states that the proportion of particles with a particle size of 40 $\mu$m or less is not less than 50 mass%, more preferably not less than 90 mass%, and still more preferably not less than 95 mass% in the weight-basis grain size distribution measured using a Coulter counter method in the requirement (ii).

The phrase that the proportion of particles with a particle size of 40 $\mu$m or less is not less than 50 mass% means that the amount of coarse particles is small. The fewness of coarse particles is probably advantageous in that when such ultrahigh molecular weight olefin polymer particles (D) are dispersed in the thermosetting resin, the substance added (particles) contributes to the enhancement in impact resistance with good efficiency.

In addition to the requirements discussed above, the ultrahigh molecular weight olefin polymer particles (D) preferably further satisfy one or more of the requirements described below.

Requirement (iii)

The aspect ratio is 1.0 to 1.4. The aspect ratio is measured by analyzing images of the ultrahigh molecular weight olefin polymer particles (D). The aspect ratio is the ratio of the length to the width of a minimal rectangle (circumscribed rectangle) that encloses the particle in a projected image. The closer the ratio is to 1, the closer the projected shape of the particle is to a perfect circle, and thus the closer the particle itself is to spherical. In the invention, the aspect ratio is measured with respect to thousands of particles, and the value at cumulative 50% is adopted as the aspect ratio of the high molecular weight olefin polymer particles (D) as a whole.

As evident from the definition of the aspect ratio, the lower limit of the aspect ratio is 1.0 and this value represents the most preferred case. Thus, there is no point in setting any specific lower limit, but the lower limit, if any, is 1.1, preferably 1.05, and more preferably 1.0. On the other hand, a preferred upper limit is 1.4, preferably 1.3, and more preferably 1.2.

Requirement (iv)

The melting point (Tm) of the ultrahigh molecular weight olefin polymer forming the particles (D) (when the ultrahigh molecular weight olefin polymer particles (D) are a crosslinked product of an ultrahigh molecular weight olefin polymer, the melting point of the ultrahigh molecular weight olefin polymer before crosslinking) is 125 to 145°C as measured with a differential scanning calorimeter (DSC). A specific measurement method is described in the section of Examples. The above lower limit of the melting point advantageously ensures that the particles will retain their shape even during the heating steps in the production of the resin composition, prepregs and fiber-reinforced composite materials, and that the obtainable fiber-reinforced composite material attains enhanced interlaminar fracture toughness.

(Methods for producing ultrahigh molecular weight olefin polymer particles (D))

In the invention, the ultrahigh molecular weight olefin polymer particles (D) may be produced by any methods without limitation. Of the ultrahigh molecular weight olefin polymer particles (D), those particles that include the ultrahigh molecular weight olefin polymer may be produced by, for example, any of the methods disclosed in the following literatures:

    (1) WO 2006/054696
    (2) WO 2010/074073
    (3) JP-A-S60-163935
    (4) WO 2008/013144
    (5) WO 2009/011231

As already mentioned, the ultrahigh molecular weight olefin polymer particles (D) may be a crosslinked product. Some example crosslinking methods are to treat the ultrahigh molecular weight olefin polymer with an organic peroxide, to irradiate the ultrahigh molecular weight olefin polymer with a radiation, and to treat the ultrahigh molecular weight olefin polymer with a silane. The shape of the particles is not usually changed by the crosslinking treatment. Thus, the crosslinked ultrahigh molecular weight olefin polymer usually has a particle shape. For example, the application of a radiation to the ultrahigh molecular weight olefin polymer gives rise to the breakage and crosslinking of molecular chains, resulting in the bonding of molecular chains at crosslinking points. Examples of the radiations include $\alpha$ radiation, $\beta$ radiation, $\gamma$ radiation, electron beam and ions. While any of these radiations may be used, electron beam or $\gamma$ radiation is suited. The formation of crosslinking is advantageous in that the particles become more resistant to deformation at high temperatures and can be expected to retain their shape.

In the irradiation method, the dose is usually 50 to 700 kGy, and preferably 100 to 500 kGy. The above dose advantageously ensures that the crosslinking reaction of the ultrahigh molecular weight olefin polymer takes place efficiently. The above upper limit of the dose ensures that the degradation of the ultrahigh molecular weight olefin polymer is prevented. The lower limit of the dose advantageously ensures that the crosslinking of polymer chains occurs at a sufficient rate.

The properties specified in the requirements of the ultrahigh molecular weight olefin polymer particles (D) may be controlled as described below.

(Intrinsic viscosity [η]〉

The intrinsic viscosity [η] may be controlled by the temperature of the polymerization system during the polymerization reaction, or may be controlled by adding hydrogen to the polymerization system.

(Average particle size d50)

The average particle size d50 is controlled by selecting the type of a catalyst used in the production of the ultrahigh molecular weight olefin polymer particles (D). In some specific examples, polymer particles with an average particle size of about several μm to 10 μm, namely, with an average particle size close to the lower limit may be obtained in accordance with the disclosure of the literatures (1) and (2) described above, and polymer particles with an average particle size controlled in the range of about 10 to 100 μm may be obtained in accordance with the disclosure of the literature (3) described above. Further, polymer particles with an average particle size of about 100 μm to about several hundreds of pm, namely, with an average particle size close to the upper limit may be obtained in accordance with the disclosure of the literatures (4) and (5) described above. Alternatively, the average particle size may be controlled by selecting the ultrahigh molecular weight olefin polymer particles from commercial such particles satisfying the requirement (ii).

The polymer obtained by polymerization or purchased from the market may be sieved to remove coarse particles. In some cases, the average particle size may be thus controlled. The opening size of the sieve may be selected in accordance with purpose.

The grain size distribution may be controlled by various methods. Example methods include the selection of the type of a catalyst, and the use of a sieve similarly to the controlling of the average particle size.

(Melting point)

The melting point is controlled by selecting the type of an olefin that forms the ultrahigh molecular weight olefin polymer particles (D). In the case of a copolymer, the melting point may be controlled by controlling the chemical composition of the copolymer. For example, the melting point of an ethylene·α-olefin copolymer is decreased with increasing proportion of the α-olefin copolymerized with ethylene.

(Aspect ratio)

The aspect ratio may be controlled by selecting the type of a catalyst used in the production of the ultrahigh molecular weight olefin polymer particles (D). The closer the shape of the catalyst is to spherical, that is, the smaller the aspect ratio is, the smaller the aspect ratio of the obtainable ultrahigh molecular weight olefin polymer particles (D) tends to be.

(Thermosetting resins (B)〉

The thermosetting resin (B) used in the invention is preferably a resin that is cured by external energy such as heat, light or electron beam to form at least partially a three dimensional cured product. Thermosetting resins described herein include epoxy resins, modified epoxy resins, phenolic resins, melanin resins, bismaleimide resins, unsaturated polyester resins, vinyl ester resins and benzoxazine resins. In the present invention, epoxy resins and modified epoxy resins are used. The epoxy resins may be conventional epoxy resins without limitation. Specific examples include bifunctional epoxy resins, for example, bisphenol epoxy resins, alcohol epoxy resins, biphenyl epoxy resins, naphthalene epoxy resins, dicyclopentadiene epoxy resins, diphenylfluorene epoxy resins, hydrophthalic acid epoxy resins, dimer acid epoxy resins and alicyclic epoxy resins, and polyfunctional epoxy resins, for example, glycidyl ether epoxy resins such as tetrakis(glycidyloxyphenyl)ethane and tris(glycidyloxyphenyl)methane, glycidylamine epoxy resins such as tetraglycidyldiaminodiphenylmethane, naphthalene epoxy resins, phenol novolac epoxy resins and cresol novolac epoxy resins, that are novolac epoxy resins, and phenol epoxy resins. Further, various modified epoxy resins such as urethane-modified epoxy resins and rubber-modified epoxy resins may be used. It is also possible to use a mixture of these resins.

(Curing agents (C)〉

The curing agent (C) may be a known curing agent that can cure the thermosetting resin (B). A compound which has an active group capable of reacting with the epoxy group is used as the curing agent for an epoxy resin.

Specific examples include aliphatic polyamines, aromatic polyamines, polyamide resins, secondary and tertiary amines, aminobenzoate esters, various acid anhydrides, phenol novolac resins, cresol novolac resins, polyphenol compounds, imidazole derivatives, tetramethylguanidine, thiourea-amine adducts, carboxylic acid anhydrides such as methylhexahydrophthalic anhydride, carboxylic acid hydrazides, carboxylic acid amides, polymercaptans and Lewis acid complexes such as boron trifluoride ethylamine complex. The curing agents may be used singly, or a plurality thereof may be used in combination.

By using an aromatic polyamine as the curing agent, an epoxy resin cured product with good heat resistance may be obtained. Of the aromatic polyamines, in particular, diaminodiphenylsulfone and derivatives thereof, and various isomers of such compounds are curing agents that are suited to obtain epoxy resin cured products with good heat resistance.

By using a combination of dicyandiamide with a urea compound, for example, with 3, 4-dichlorophenyl-1, 1-dimethylurea, or by using an imidazole as the curing agent, curing may be performed at a relatively low temperature to provide high resistance to heat and water. Curing of an epoxy resin with an acid anhydride gives a cured product with lower water absorption than when the curing is performed with an amine compound. The use of a latent product of the curing agent, for example, a microcapsule leads to prepregs having good storage stability, in particular, a small change in tack and drape properties, even when left at room temperature.

A preferred amount added of the curing agent (C) varies depending on the types of the thermosetting resin (B) and the curing agent (C), and may be determined appropriately with reference to the amount in conventional prepregs. In the combination of an epoxy resin with an aromatic amine curing agent, for example, it is preferable from the points of view of the mechanical properties and heat resistance of fiber-reinforced composite materials to add the curing agent generally in such an amount that the stoichiometric ratio of the amine equivalent is 0.7 to 1.3, and preferably 0.8 to 1.2 relative to one epoxy equivalent.

(Other components)

The resin composition (E) used in the invention may contain a thermosetting resin or a thermoplastic resin other than the thermosetting resin (B), the curing agent (C) and the ultrahigh molecular weight olefin polymer while still achieving the advantageous effects of the invention. The content of such a thermosetting resin and a thermoplastic resin in the resin composition (E) is usually not more than 30 mass%, preferably not more than 20 mass%, and more preferably not more than 10 mass%.

Where necessary, the resin composition (E) may appropriately further contain a various additive such as a curing promoter, a reactive diluent, a filler, an antiaging agent, a flame retardant and a pigments. The content of such additives in the resin composition (E) is usually not more than 10 mass%, and preferably not more than 5 mass%.

⟨Methods for producing resin composition (E)⟩

The resin composition (E) may be produced by any of the conventionally known methods without limitation. The thermosetting resin (B) is an epoxy resin and an example range of the kneading temperature used in the production of the resin composition (E) is 10 to 200°C. At above 200°C, the epoxy resin is thermally degraded or is partially cured, and consequently the storage stability of the obtainable resin composition (E) and that of prepregs using the composition are decreased at times. At below 10°C, the resin composition (E) exhibits so high a viscosity that kneading is substantially difficult at times. The temperature is preferably in the range of 20 to 180°C, and more preferably 30 to 170°C.

The kneading machine may be conventional. Examples include roll mills, planetary mixers, kneaders, extruders, Banbury mixers, mixing vessels equipped with a stirring blade, and horizontal mixing tanks. The kneading of the components may take place in the air or in an inert gas atmosphere. When, in particular, the kneading is performed in the air, the temperature and humidity of the atmosphere are preferably controlled. For example, although not particularly limited to, the kneading preferably takes place at a constant controlled temperature of not more than 30°C or in a low humidity atmosphere having a relative humidity of not more than 50% RH.

The components may be kneaded together in a single stage, or may be added successively and kneaded in several stages. In the case of successive addition, the components may be added in any order. From the point of view of the storage stability of the obtainable resin composition (E) and prepregs, it is preferable to add the curing agent last.

(Methods for producing prepregs)

Next, methods for producing prepregs will be described.

A prepreg in the present invention may be produced by impregnating the reinforcement fiber (A) with the resin composition (E) obtained as described hereinabove.

The methods for producing the prepregs of the invention are not particularly limited, and any of the conventionally known methods may be used. Some example methods are a hot melt method in which the resin composition (E) obtained as described above is applied onto a release sheet to form a thin film, which is then released, and the resultant resin film is allowed to impregnate the reinforcement fiber (A) in the form of a sheet, and a solvent method in which the resin composition (E) is made into a varnish with a solvent and the reinforcement fiber (A) is impregnated with the varnish. Of these methods, the hot melt method is preferable in terms of handling properties, and the mechanical characteristics of the obtainable fiber-reinforced composite materials. While a preferred range of the content of the reinforcement fiber (A) in the obtainable prepreg varies depending on the type and form of the reinforcement fiber (A), and the chemical composition of the resin composition (E), it is generally preferable that the reinforcement fiber (A) be present at 10 to 80 vol%.

(Fiber-reinforced composite materials)

A fiber-reinforced composite material of the invention is obtained by curing the prepreg of the invention. A single sheet or a stack of the prepreg may be used. Generally, the prepreg is used as a stack. That is, the prepreg of the invention is cut appropriately, stacked as required, and formed into a desired shape while being thermally cured by heating and pressing with a device such as an autoclave or a hot press. The thermal curing conditions are determined in accordance with the types of the thermosetting resin and the curing agent that are used.

The prepreg sheets may be stacked in any manner that is selected without limitation in accordance with factors such as product design. For example, the prepreg sheets may be stacked pseudo isotropically, in one direction, at $\pm$ 45°, or the like. When, however, two or more sheets are stacked in the same direction, it is desirable from the point of view of reinforcement efficiency that carbon fibers of the same type do not overlap with one another.

Examples of the shapes of the shaped articles include flat sheets, cylinders, and three-dimensional shapes obtained by stacking of the prepreg sheets. The orientation angle and thickness of the fiber may be determined in accordance with the performance required of the obtainable fiber-reinforced composite material.

EXAMPLES

The present invention will be described in further detail based on Examples hereinbelow. The scope of the invention is not limited to such Examples. Methods for the measurements of properties are described below.

⟨Measurement of intrinsic viscosity [η]⟩

The intrinsic viscosity [η] was measured with respect to a solution of ultrahigh molecular weight olefin polymer particles in decalin at a temperature of 135°C.

More specifically, approximately 20 mg of a measurement sample was dissolved into 15 ml of decalin, and the specific viscosity $\eta_{sp}$ was measured in an oil bath at 135°C. The decalin solution was diluted by the addition of 5 ml of decalin solvent, and the specific viscosity $\eta_{sp}$ was measured in the similar manner. This dilution was repeated two more times, and the concentration (C) was extrapolated to 0. The value of $\eta_{sp/C}$ at zero concentration was obtained as the intrinsic viscosity [η] (unit: dl/g), as shown in the following equation.

$$[\eta] = \lim(\eta_{sp}/C) \ (C \rightarrow 0)$$

(Average particle size d50 and proportion of particles with a particle size of 40 μm or less)

The average particle size d50 was measured with a Coulter counter (Multisizer 3 manufactured by BECKMAN COULTER). An aperture tube having pores with a pore diameter of 200 μm was attached to the Coulter counter, and a sample weighing 2 mg was analyzed to measure the grain size distribution, thus obtaining a grain size distribution curve. The curve was analyzed by an established method to determine the average particle size d50 and the proportion of μparticles with a particle size of 40 μm or less.

(Aspect ratio)

With use of a grain size and shape distribution analyzer (PITA-2 manufactured by SEISHIN ENTERPRISE CO., LTD.), images of 3300 particles were analyzed and their aspect ratios were measured. The value at cumulative 50% was taken as the aspect ratio of ultrahigh molecular weight olefin polymer particles (D).

(Melting point)

The melting point (Tm) was measured by DSC. Approximately 5 mg of a sample was packed into a measurement aluminum pan. With a DSC (DSC220C manufactured by Seiko Instruments Inc.), the sample was melted by being heated to 200°C and was thereafter cooled to 30°C at -10°C/min. The sample was then heated at 10°C/min while recording a crystal fusion peak, and the melting point (Tm) was calculated from the peak top.

(Tensile strength and tensile elastic modulus of composite materials)

The tensile strength and the tensile elastic modulus were measured by a tensile test. Aluminum tabs 50 mm in length were attached to both ends of a test piece 20 mm in width and 200 mm in length. With Tensilon universal tester (RTC-1350A manufactured by ORIENTEC CO., LTD.), the test was performed at a test speed of 1 mm/min.

(Flexural strength and flexural elastic modulus of composite materials)

The flexural strength and the flexural elastic modulus were measured by a three-point bending test described in JIS K7074. A test piece 15 mm in width and 100 mm in length was provided and was tested on Instron universal tester (Type 55R4026 manufactured by INSTRON) at a test speed of 5 mm/min.

(Interlaminar fracture toughness of composite materials)

The mode II interlaminar fracture toughness was measured by an ENF (End Notched Flexure) test. An initial crack with an initial crack length of 40 mm was introduced into a test piece 25 mm in width, 140 mm in length and 3 mm in thickness. The interlaminar fracture toughness was determined by a three-point bending test using Instron universal tester (Type 55R4026 manufactured by INSTRON) at a test speed of 0.5 mm/min.

Hereinbelow, the prepregs and the fiber-reinforced composite materials of the present invention will be described in greater detail. The resin materials used in Examples, the methods for producing prepregs and fiber-reinforced composite materials, and the results of the measurements of properties are described below. The prepregs in Examples were fabricated and evaluated in an atmosphere at a temperature of 25°C $\pm$ 2°C and a relative humidity of 50% unless otherwise mentioned.

[Examples 1 to 4 and Comparative Example 1]

An epoxy resin (product name: jER828, manufactured by Mitsubishi Chemical Corporation) was used as a thermosetting resin serving as a base material of a matrix resin, and a modified aromatic amine (product name: jER Cure W, manufactured by Mitsubishi Chemical Corporation) was used as a curing agent. The amount of jER Cure W was 25 parts by mass per 100 parts by mass of jER828. These were mixed together to give a mixture.

As an ultrahigh molecular weight olefin polymer, fine particles of ultrahigh molecular weight polyethylene (product name: MIPELON XM220, manufactured by Mitsui Chemicals, Inc.) having an intrinsic viscosity [$\eta$] of 14 dl/g, an average particle size d50 of 30 $\mu$m, a proportion of particles with a particle size of 40 $\mu$m or less of 70 mass%, an aspect ratio of 1.2 and a melting point of 136°C were irradiated with electron beam at 200 kGy and were thereafter added to the above mixture in a concentration described in Table 1 (relative to the amount of the obtainable resin composition taken as 100 mass%). The resultant mixture was stirred and mixed with a hot stirrer at 600 rpm and at 100°C for 24 hours to give a resin composition as a varnish. The ultrahigh molecular weight olefin polymer after being crosslinked by the electron beam irradiation had a melting point of 136°C and was partly insoluble in decalin at 135°C. The average particle size d50, the proportion of particles with a particle size of 40 $\mu$m or less, and the aspect ratio were unchanged from before the application of the electron beam.

The resin composition and a flat woven fabric of carbon fiber (product name: TORAYCA cloth, manufactured by TORAY INDUSTRIES, INC.) were fabricated into a 12-ply prepreg stack by a hand lay-up process. While applying a pressure of 4 kPa, the prepreg stack was cured at 100°C for 2 hours and thereafter at 175°C for 4 hours to give a flat sheet sample.

[Table 1]

|  | Concentration of fine particles added (mass%) | Tensile strength (MPa) | Tensile elastic modulus (GPa) | Flexural strength (MPa) | Flexural elastic modulus (GPa) | Interlaminar fracture toughness (KJ/m$^2$) |
|---|---|---|---|---|---|---|
| Example. 1 | 1.0 | 545 | 53 | 720 | 55 | 2.17 |
| Example 2 | 2.5 | 550 | 52 | 700 | 55 | 2.13 |
| Example. 3 | 5.0 | 520 | 51 | 670 | 55 | 2.02 |
| Example. 4* | 9.0 | 510 | 52 | 630 | 56 | 2.02 |
| Comparative Example. 1 | 0.0 | 475 | 48 | 650 | 53 | 1.98 |
| *Reference example | | | | | | |

**Claims**

1. A prepreg comprising a reinforcement fiber (A) and a resin composition (E), the resin composition (E) comprising 0.1 to 8 mass% of particles (D) comprising an ultrahigh molecular weight olefin polymer or a crosslinked product thereof and satisfying requirements (i) to (ii) below, the resin composition (E) further comprising a thermosetting resin (B) and a curing agent (C);

   (i) the intrinsic viscosity [η] of the ultrahigh molecular weight olefin polymer forming the particles, as measured in decalin solvent at 135°C and determined as defined in the description, is 5 to 50 dl/g;
   (ii) the average particle size d50, which is a value at cumulative 50 mass% of grain size distribution obtained by the measurement of weight-basis grain size distribution using a Coulter counter method, as defined in the description, is 3 to 200 μm,

   wherein the thermosetting resin (B) is an epoxy resin, and the curing agent (C) is an epoxy curing agent.

2. The prepreg according to Claim 1, wherein the particles (D) comprising an ultrahigh molecular weight olefin polymer or a crosslinked product thereof further satisfy requirement (iii) below:

   (iii) the aspect ratio, as defined in the description, is 1.0 to 1.4.

3. The prepreg according to Claim 1 or 2, wherein the particles (D) comprising an ultrahigh molecular weight olefin polymer or a crosslinked product thereof further satisfy requirement (iv) below:

   (iv) the melting point (Tm) of the ultrahigh molecular weight olefin polymer forming the particles measured with a differential scanning calorimeter (DSC) is 125 to 145°C.

4. The prepreg according to any one of Claims 1 to 3, wherein the reinforcement fiber (A) is a carbon fiber.

5. The prepreg according to any one of Claims 1 to 4, wherein the ultrahigh molecular weight olefin polymer forming the particles (D) including an ultrahigh molecular weight olefin polymer or a crosslinked product thereof is an ultrahigh molecular weight polyethylene.

6. A fiber-reinforced composite material obtainable by curing the prepreg described in any one of Claims 1 to 5.

**Patentansprüche**

1. Prepreg, umfassend eine Verstärkungsfaser (A) und eine Harzzusammensetzung (E), wobei die Harzzusammensetzung (E) 0,1 bis 8 Massen-% Teilchen (D) umfasst, die ein Olefinpolymer mit ultrahohem Molekulargewicht oder ein vernetztes Produkt davon umfassen und die Anforderungen (i) bis (ii) unten erfüllen, wobei die Harzzusammensetzung (E) ferner ein wärmehärtbares Harz (B) und ein Härtungsmittel (C) umfasst;

(i) die intrinsische Viskosität [η] des Olefinpolymers mit ultrahohem Molekulargewicht, das die Teilchen bildet, wie in Decalin-Lösungsmittel bei 135 °C gemessen, und wie in der Beschreibung definiert bestimmt, ist 5 bis 50 dl/g;

(ii) die durchschnittliche Teilchengröße d50, die ein Wert bei kumulativen 50 Massen-% Korngrößenverteilung ist, erhalten durch die Messung von Korngrößenverteilung auf Gewichtsbasis unter Verwendung eines Coulter-Counter-Verfahrens, wie in der Beschreibung definiert, ist 3 bis 200 μm,

wobei das wärmehärtbare Harz (B) ein Epoxidharz ist und das Härtungsmittel (C) ein Epoxidhärtungsmittel ist.

2. Prepreg nach Anspruch 1, wobei die Teilchen (D), die ein Olefinpolymer mit ultrahohem Molekulargewicht oder ein vernetztes Produkt davon umfassen, ferner die Anforderung (iii) unten erfüllen:

(iii) das Seitenverhältnis, wie in der Beschreibung definiert, ist 1,0 zu 1,4.

3. Prepreg nach Anspruch 1 oder 2, wobei die Teilchen (D), die ein Olefinpolymer mit ultrahohem Molekulargewicht oder ein vernetztes Produkt davon umfassen, ferner die Anforderung (iv) unten erfüllen:

(iv) der Schmelzpunkt (Tm) des Olefinpolymers mit ultrahohem Molekulargewicht, das die Teilchen bildet, gemessen mit einem dynamischen Differenzkalorimeter (differential scanning calorimeter, DSC), ist 125 bis 145 °C.

4. Prepreg nach einem der Ansprüche 1 bis 3, wobei die Verstärkungsfaser (A) eine Kohlefaser ist.

5. Prepreg nach einem der Ansprüche 1 bis 4, wobei das Olefinpolymer mit ultrahohem Molekulargewicht, das die Teilchen (D) bildet, einschließlich eines Olefinpolymers mit ultrahohem Molekulargewicht oder eines vernetzten Produkts davon, ein Polyethylen mit ultrahohem Molekulargewicht ist.

6. Faserverstärktes Verbundmaterial, das durch Härten des Prepreg, beschrieben in einem der Ansprüche 1 bis 5, erhalten werden kann.

## Revendications

1. Préimprégné comprenant une fibre de renforcement (A) et une composition de résine (E), la composition de résine (E) comprenant 0,1 à 8% en masse de particules (D) comprenant un polymère d'oléfine de poids moléculaire ultra élevé ou un produit réticulé de celui-ci et satisfaisant les exigences (i) à (ii) ci-dessous, la composition de résine (E) comprenant en outre une résine thermodurcissable (B) et un agent de durcissement (C) ;

(i) la viscosité intrinsèque [η] du polymère d'oléfine de poids moléculaire ultra élevé formant les particules, telle que mesurée dans le solvant de décaline à 135 ° C et déterminée comme défini dans la description, est de 5 à 50 dl / g ;

(ii) la taille moyenne des particules d50, qui est une valeur à 50% en masse cumulée de la distribution granulométrique obtenue par la mesure de la distribution granulométrique basée sur le poids en utilisant un procédé de compteur Coulter, tel que défini dans la description, est de 3 à 200 μm, dans lequel la résine thermodurcissable (B) est une résine époxy et l'agent de durcissement (C) est un agent de durcissement époxy.

2. Préimprégné selon la revendication 1, dans lequel les particules (D) comprenant un polymère d'oléfine de poids moléculaire ultra élevé ou un produit réticulé de celui-ci satisfont en outre à l'exigence (iii) ci-dessous :

(iii) le rapport d'aspect, tel que défini dans la description, est de 1,0 à 1.4.

3. Préimprégné selon la revendication 1 ou 2, dans lequel les particules (D) comprenant un polymère d'oléfine de poids moléculaire ultra élevé ou un produit réticulé de celui-ci satisfont en outre à l'exigence (iv) ci-dessous :

(iv) le point de fusion (Tm) du polymère d'oléfine de poids moléculaire ultra élevé formant les particules mesuré avec un calorimètre à balayage différentiel (DSC) est de 125 à 145 ° C.

4.  Préimprégné selon l'une quelconque des revendications 1 à 3, dans lequel la fibre de renforcement (A) est une fibre de carbone.

5.  Préimprégné selon l'une quelconque des revendications 1 à 4, dans lequel le polymère d'oléfine de poids moléculaire ultra élevé formant les particules (D) incluant un polymère d'oléfine de poids moléculaire ultra élevé ou un produit réticulé de celui-ci est un polyéthylène de poids moléculaire ultra élevé.

6.  Matériau composite renforcé de fibres pouvant être obtenu en durcissant le préimprégné décrit dans l'une quelconque des revendications 1 à 5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009221460 A
- JP 2011057907 A
- JP 2012193322 A
- JP 2014009280 A
- WO 2006054696 A
- WO 2010074073 A
- JP S60163935 A
- WO 2008013144 A
- WO 2009011231 A